# EUROPÄISCHE PATENTSCHRIFT

(11) **EP 0 676 621 B1**
(45) Veröffentlichungstag und Bekanntmachung des Hinweises auf die Patenterteilung: **29.12.1997**
(21) Anmeldenummer: 94104763.1
(22) Anmeldetag: 25.03.1994
(51) Int. Cl.: G01D 5/16, G01D 3/028

(54) **Magnetische Positionsmesseinrichtung**
Magnetic position measuring system
Système magnétique pour mesurer la position

(43) Veröffentlichungstag der Anmeldung: 11.10.1995
(73) Patentinhaber: Dr. Johannes Heidenhain GmbH, D-83292 Traunreut (DE)
(72) Erfinder: Spies, Alfons, Dipl.-Ing., D-83358 Seebruck (DE)

(56) Entgegenhaltungen:
- EP-A- 0 421 489
- FR-A- 2 597 592
- PATENT ABSTRACTS OF JAPAN vol. 15, no. 347 (P-1246) 3. September 1991 & JP-A-03 131 717 (KOMATSU LTD.) 5. Juni 1991

## Beschreibung

Die Erfindung bezieht sich auf eine Positionsmeßeinrichtung gemäß dem Oberbegriff des Anspruches 1.

Eine erste gattungsgemäße Positionsmeßeinrichtung ist beispielsweise aus der JP-A-3 131 717 bekannt. Dort wird ein magnetisches Linearmeßsystem vorgeschlagen, bei dem eine magnetische Teilungsstruktur mit Hilfe magnetfeldempfindlicher Elemente abgetastet wird. Über die geeignete Dimensionierung eines magnetischen Wechselfeldes, das zur Linearisierung der Ausgangscharakteristik dient, soll erreicht werden, daß die magnetische Teilungsstruktur vom Wechselfeld der Sensorelemente möglichst nicht verfälscht wird. Angaben dazu, wie innerhalb einer derartigen Vorrichtung eine Unempfindlichkeit der Sensorelemente gegenüber störenden Fremdfeldern gewährleistet werden kann bzw. Nullpunktsverschiebungen der Sensoren vermieden werden können, sind in diesem Dokument nicht zu finden.

Eine zweite gattungsgemäße Positionsmeßeinrichtung ist desweiteren aus der EP-A-0 421 489 bekannt. In dieser Druckschrift werden insbesondere eine Reihe von Maßnahmen vorgeschlagen, um eine möglichst lineare Ausgangscharakteristik der eingesetzten magnetfeldempfindlichen Sensorelemente zu erhalten. Hierzu werden Möglichkeiten vorgestellt, wie eine entsprechende Ansteuerelektronik gestaltet werden sollte.

Aus der DE 28 34 519 A1 ist desweiteren eine digitale Längenmeßvorrichtung bekannt, mit zwei relativ zueinander verstellbaren Teilen, von denen einer einen Maßstab und der andere einen Detektor zum Abtasten des Maßstabes und zum Erzeugen elektrischer Signale, die der abgetasteten Länge entsprechen, trägt, und mit einer Elektronik zum Verarbeiten der Detektorsignale, wobei der Maßstab einen Markierungsträger mit magnetisierbarem Material aufweist, welcher in vorbestimmten Abständen zur Bildung von ablesbaren Markierungen magnetisiert ist, und wobei der Detektor ein Lesekopf für die Markierungen ist. Als eine weiterverarbeitende Einrichtung kann dabei eine Digital-Anzeigevorrichtung verwendet werden. Der Markierungsträger kann dabei eine Magnetschicht sein, wobei die Markierungen durch sinusförmige Magnetisierung zweier Spuren gebildet sind, wobei für jede Spur je ein Lesekopf vorhanden ist. Der Detektor kann mindestens einen flußempfindlichen Magnetkopf aufweisen, der zum Lesen bei geringer Relativgeschwindigkeit zwischen Detektor und Markierungsträger nach dem Prinzip eines magentischen Modulators geschaltet ist. Bei der angegebenen Veröffentlichung fehlen detaillierte Angaben über die Ausführung des Detektors vollständig.

Ferner ist aus der EP 0 069 392 A2 eine digitale Positionsmeßeinrichtung bekannt, bei der ein Detektor vorgesehen ist, der einen magnetoresistiven Sensor aufweist. Dort sind magnetoresistive Sensoren mit unterschiedlichen Kennlinien beschreiben und Brückenschaltungen mit derartigen Sensoren offenbart.

Der Erfindung liegt die Aufgabe zugrunde, bei einer Positionsmeßeinrichtung eine Abtasteinheit mit magnetfeldempfindlichem Sensor zu schaffen, die unempfindlich gegen störende Fremdfelder ist, Nullpunktverschiebungen der Sensoren ausgleicht und die wenig Oberwellenanteile erzeugt.

Diese Aufgabe wird von einer Positionsmeßeinrichtung mit den Merkmalen des Anspruches 1 gelöst.

Die Vorteile der erfindungsgemäßen Positionsmeßeinrichtung liegen in deren Funktionssicherheit, in der Stabilisierung des Arbeitspunktes der magnetfeldempfindlichen Elemente innerhalb ihrer Kennlinie und den daraus resultierenden positiven Eigenschaften.

Mit Hilfe der Zeichnungen soll anhand von Ausführungsbeispielen die Erfindung näher erläutert werden.

Es zeigt
- Figur 1a: eine Prinzipdarstellung einer Positionsmeßeinrichtung;
- Figur 1b: eine Einzelheit aus Figur 1a;
- Figur 2: eine Positionsmeßeinrichtung mit magnetischem Hilfsfeld;
- Figur 3: eine Positionsmeßeinrichtung mit anders gerichtetem Hilfsfeld;
- Figur 4: eine Positionsmeßeinrichtung mit senkrechtem Hilfsfeld;
- Figur 5: eine Anordnung zur Erzeugung eines magnetischen Hilfsfeldes;
- Figur 6: einen stromführenden Leiter zur Erzeugung eines Hilfsfeldes gemäß Figur 5 und
- Figur 7: ein Blockschaltbild.

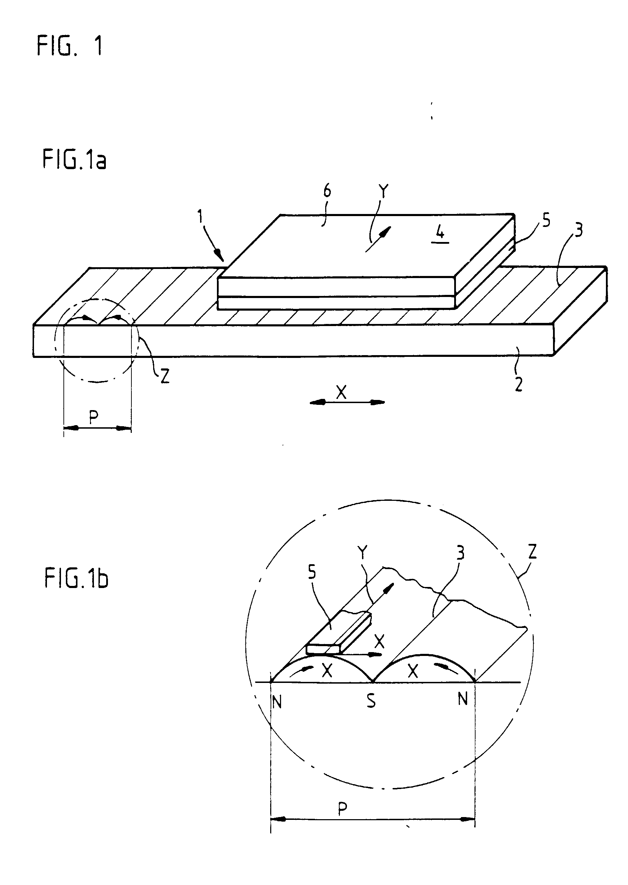

In Figur 1a ist eine Prinzipdarstellung einer magnetischen Längenmeßeinrichtung 1 gezeigt. Die Längenmeßeinrichtung 1 besteht im wesentiichen aus einem Maßstab 2, der eine periodische Meßteilung 3 aufweist, sowie aus einer Abtasteinheit 4 zur Abtastung der Meßteilung 3. Der Maßstab 2 besteht aus magnetischem Material und ist abwechselnd mit gegensätzlicher Feldstärke magnetisiert - daraus bildet sich die periodische Meßteilung 3 mit der Teilungsperiode P. Die Magnetisierung erfolgt längs der Ebene, in der sich der Maßstab 2 erstreckt, kann aber auch senkrecht dazu verlaufen, was hier jedoch nicht gezeigt ist.

Die Magnetisierung erzeugt ein Streufeld - als Maßstabfeld X bezeichnet -, welches symbolisch in der vergrößerten Einzelheit Z dargestellt ist.

Die periodische Meßteilung 3 wird von magnetfeldempfindlichen Elementen 5 abgetastet, die sich in der Abtasteinheit 4 befinden und auf die in der Beschreibung zu den folgenden Figuren noch näher eingegangen wird. Dabei wird als Bezugszeichen eine 5 für das oder die magnetfeldempfindlichen Elemente eingesetzt.

Die Abtasteinheit 4 weist darüber hinaus einen Baustein 6 auf, der ein magnetisches Hilfsfeld oder auch Fremdfeld Y erzeugt, welches permanent magnetisch oder elektromagnetisch erzeugt wird.

Dieses Fremdfeld Y macht das Maßstabfeld X gegenüber den Sensoren 5 kurzzeitig unwirksam. Das Maßstabfeld X kann gegenüber den Sensoren 5 auch mit Hilfe eines weichmagnetischen Elementes abgeschirmt werden.

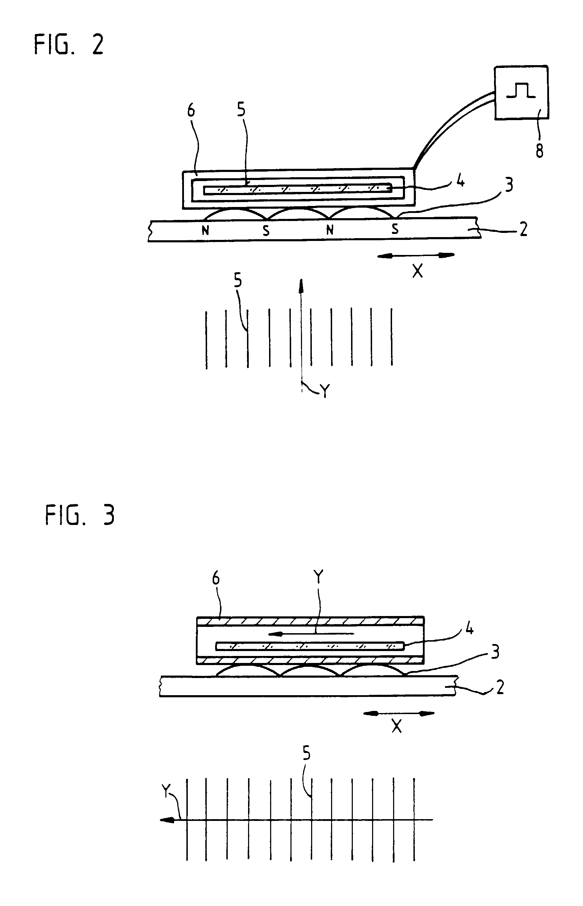

In Figur 2 ist der Maßstab 2 mit der Meßteilung 3 gezeigt, dem die Abtasteinheit 4 mit den Sensoren 5 zur Abtastung gegenüberliegt. Die Sensoren 5 sind von einer Spule 6 umschlossen, die mit Hilfe eines Pulsgenerators 8 ein magnetisches Hilfsfeld Y erzeugt. Dieses Hilfsfeld Y wird auch als Fremdfeld gegenüber dem Magnetfeld X der Meßteilung 3 bezeichnet.

Im Ausführungsbeispiel gemäß dieser Figur liegt das Fremdfeld Y in der Ebene der Sensoren 5 - also in der Ebene der Sensorstriche 5 - und parallel zu diesen.

Figur 3 zeigt eine ähnliche Konstellation, jedoch ist hier das Fremdfeld Y senkrecht zu den Sensorstrichen 5 sowie in deren Ebene ausgerichtet.

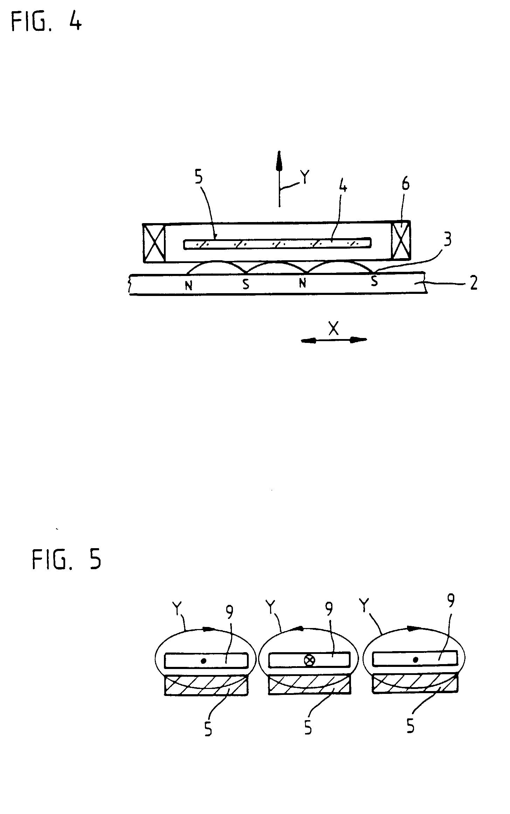

Eine weitere Möglichkeit - die weitere Varianten nicht ausschließt - ist in Figur 4 dargestellt. Hier verläuft das Fremdfeld Y senkrecht zu der Ebene, in der die Sensoren 5 der Abtasteinheit 4 liegen.

Das Fremdfeld Y kann auch durch stromführende Leiter 9, die in unmittelbarer Nähe der Sensorstriche 5 angeordnet sind, erzeugt werden. Werden die Leiter 9 vom Strom durchflossen, so treibt deren Feld die Sensoren 5 in die Sättigung und schaltet so den Einfluß des Magnetfeldes X der Meßteilung 3 aus. Die Ausrichtung des Fremdfeldes erfolgt dabei wechselweise ähnlich der gemäß Figur 3.

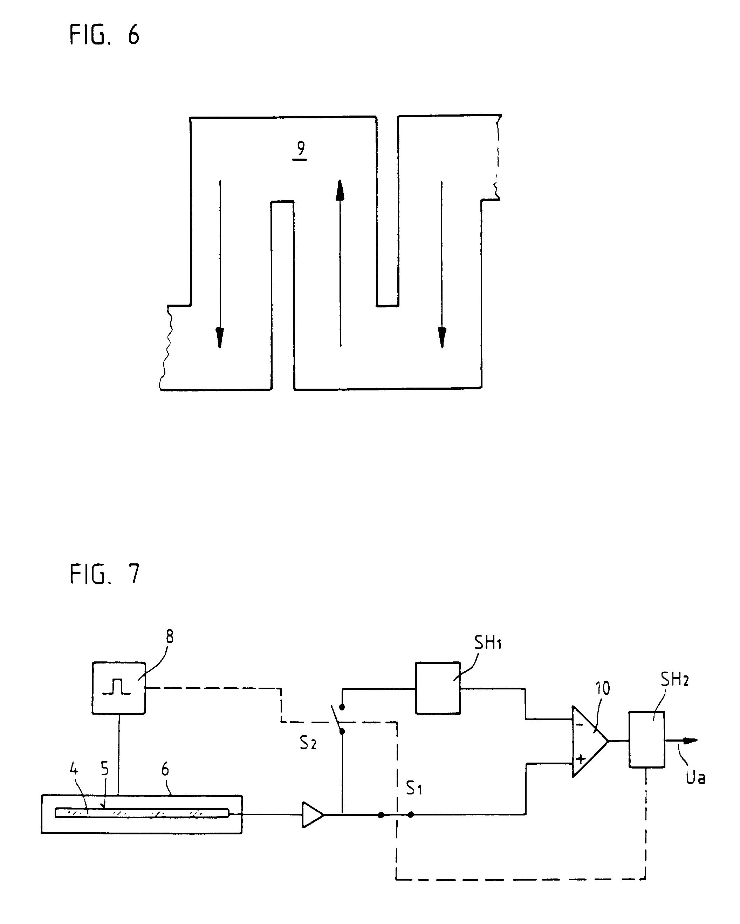

In Figur 6 ist eine mögliche Geometrie der Leiter 9 dargestellt.

Figur 7 stellt ein Blockschaltbild dar, welches auch einen Pulsgenerator 8 zeigt. Dieser Pulsgenerator 8 erzeugt durch einen Strom- oder Spannungsstoß kurzzeitig mittels der Spule 6 oder der Leiter 9 ein Magnetfeld Y, das gemäß vorstehender Definition mit Hilfs- oder Fremdfeld Y bezeichnet ist. Dieses Fremdfeld Y muß so groß sein, daß die Sensoren 5 in die Sättigung getrieben werden.

Wenn die Sensoren 5 in der Sättigung sind, hat das Maßstabsfeld X keinen Einfluß mehr auf die Sensoren 5. Brückennullpunkte einer an sich bekannten Brückenschaltung sind dann allein durch die Ohmschen Nullwiderstände in den Brückenzweigen bestimmt.

Vom Pulsgenerator 8 werden zwei Schalter S1 und S2 bedient, die abwechselnd geöffnet sind.

Im normalen Betrieb ist Schalter S1 geschlossen, Schalter S2 geöffnet. Gleichzeitig mit dem Hilfsfeld Y, das vom Pulsgenerator 8 über die Spule 6 am Sensor 5 erzeugt wird, wird Schalter S2 geschlossen und Schalter S1 geöffnet. Die nun am Sensor 5 anliegende Nullspannung wird in einem mit SH₁ bezeichneten Abtast- und Halteglied gespeichert.

Ist das Hilfsfeld Y wieder abgeschaltet, wird bei geöffnetem Schalter S2 und geschlossenem Schalter S1 die Differenz von aktueller Sensorspannung und Nullspannung am Differenzverstärker 10 ausgegeben. Die Ausgangsspannung Ua des Differenzverstärkers 10 ist also unabhängig von der Nullpunktsdrift des Sensors 5.

Um Störungen des Ausgangssignales Ua während der Abtastphase zu vermeiden, ist noch ein zweites Abtast- und Halteglied SH₂ vorhanden, das mit dem Ausgangssignal des Sensors 5 mitläuft und nur während der aktiven Phase des Pulsgenerators 8 die letzte aktuelle Signalspannung des Sensors 5 festhält.

## Patentansprüche

1. Positionsmeßeinrichtung (1) zur Messung der Relativlage zweier zueinander beweglicher Objekte, bei der eine periodische, magnetische Meßteilung (3) in Meßrichtung von einer Abtasteinheit (4) mittels wenigstens eines magnetfeldempfindlichen Elementes (5) zur Erzeugung von positionsabhängigen Ausgangssignalen abgetastet wird, aus denen in einer Auswerteeinrichtung Positionsmeßwerte gebildet werden, wobei das mindestens eine magnetfeldempfindliche Element (5) in der Abtasteinheit (4) in einer zur Meßteilung (3) parallelen Ebene angeordnet ist und ein magnetisches Fremdfeld (Y) von einer Spule (6) oder einem stromdurchflossenen Leiter (9) erzeugbar ist und die Spule (6) oder der stromdurchflossene Leiter (9) kurzzeitig von einem Pulsgenerator (8) gespeist werden,
dadurch gekennzeichnet, daß
der Pulsgenerator (8) derart ausgebildet ist, daß das erzeugte magnetische Fremdfeld (Y) das Magnetfeld (X) der Meßteilung (3) kurzzeitig unwirksam macht und daß das magnetische Fremdfeld (Y) dabei so groß ist, daß die magnetfeldempfindlichen Elemente (5) kurzzeitig in die Sättigung getrieben werden.

2. Positionsmeßeinrichtung nach Anspruch 1, wobei der Pulsgenerator (8) derart ausgebildet ist, daß das erzeugte magnetische Fremdfeld (Y) größer ist als die Sättigungsfeldstärke der magnetfeldempfindlichen Elemente (5).

3. Positionsmeßeinrichtung nach Anspruch 1, wobei der Pulsgenerator (8) zusammen mit zwei abwechselnd geöffneten Schaltern (S₁) und (S₂), mit einer Spule (6) oder stromdurchflossenen Leitern (9) sowie mit wenigstens einem Abtast- und Halteglied (SH₁) und einem Differenzverstärker (10) einen Schaltkreis bildet.

4. Positionsmeßeinrichtung nach Anspruch 3, wobei der Pulsgenerator derart ausgebildet ist, daß bei Aktivierung des Pulsgenerators (8) das Fremdfeld (Y) erzeugt wird, oder die Abschirmung wirksam wird, der Schalter (S₁) geöffnet und der Schalter (S₂) geschlossen wird, wobei die dann am Sensor (5) anliegende Momentanspannung - üblicherweise die Nullspannung - in dem Abtast- und Halteglied (SH₁) gespeichert wird, und daß bei Deaktivierung des Pulsgenerators (8) die Zustände der Schalter (S₁) und (S₂) wechseln, die aktuelle Spannung am Sensor (5) dem Differenzverstärker (10) zugeführt und mit der im Abtast- und Halteglied (SH₁) gespeicherten, ebenfalls dem Differenzverstärker (10) zugeführten Nullspannung verglichen wird, und daß am Ausgang des Differenzverstärkers (10) eine nullpunktsdrift-freie Ausgangsspannung (Ua) zur Meßwertbildung abgegriffen werden kann.

5. Positionsmeßeinrichtung nach Anspruch 4, wobei ein weiteres Abtastund Halteglied (SH₂) im Schaltkreis angeordnet ist, welches mit dem Ausgangssignal des Sensors (5) synchronisiert ist und nur während der aktiven Phase des Pulsgenerators (8) die letzte aktuelle Signalspannung des Sensors (5) speichert.

## Claims

1. Position measuring device (1) for measuring the relative position of two objects movable relative to one another, in which a periodic magnetic measurement scale (3) is scanned in the measurement direction by a scanner unit (4) by means of at least one member (5), sensitive to magnetic fields, for generating position-dependent output signals, from which position measurement values are formed in an evaluating device, the at least one member (5) sensitive to magnetic fields in the scanner unit (4) being located in a plane parallel to the measurement scale (3), and a magnetic extraneous field (Y) may be generated from a coil (6) or a conductor (9) through which current flows, and the coil (6) or the conductor (9) through which current flows are supplied over short periods from a pulse generator (8),
characterised in that
the pulse generator (8) is so designed that the magnetic extraneous field (Y) generated, briefly renders inactive the magnetic field (X) of the measurement scale (3), and in that the magnetic extraneous field (Y) is in this case of such magnitude that the members (5) sensitive to magnetic fields, are briefly driven to saturation.

2. Position measuring device according to claim 1, in which the pulse generator (8) is so designed that the magnetic extraneous field (Y) generated is greater than the saturation field strength of the members (5) sensitive to magnetic fields.

3. Position measuring device according to claim 1, in which the pulse generator (8) forms a circuit, together with two alternately-opened switches (S₁) and (S₂), with a coil (6) or conductors (9) through which current flows, and with at least one scanner and retaining member (SH₁) and a differential amplifier (10).

4. Position measuring device according to claim 3, the pulse generator being so designed that, upon activation of the pulse generator (8), the extraneous field (Y) is generated, or the screening becomes effective, the switch (S₁) is opened and the switch (S2) is closed, the momentary voltage then applied to the sensor (5), normally the zero voltage, is stored in the scanning and retaining member (SH₁), and in that, upon deactivation of the pulse generator (8), the conditions of the switches (S₁) and (S₂) change over, the voltage at the present moment at sensor (5) is passed to the differential amplifier (10) and compared with the zero voltage stored in the scanner and retaining member (SH₁) and likewise passed to the differential amplifier (10), and in that at the output of the differential amplifier (10) an output voltage (Ua) free of zero point drift, can be derived for formation of a measurement value.

5. Position measuring device according to claim 4, a further scanning and retaining member (SH2) being located in the switching circuit, said member being synchronised with the output signal of the sensor (5), and only stores the last present signal voltage of the sensor (5) during the active phase of the pulse generator (8).

## Revendications

1. Dispositif (1) de mesure de position pour mesurer la position relative de deux objets mobiles l'un par rapport à l'autre, dans lequel une graduation de mesure (3) périodique magnétique est palpée dans la direction de mesure par une unité de palpage (4) à l'aide d'au moins un élément (5) sensible au champ magnétique aux fins de produire des signaux de sortie dépendants de la position, à partir desquels des valeurs de mesure de position sont formées dans un dispositif de traitement, l'élément (5) sensible au champ magnétique, au nombre d'au moins un, dans l'unité de palpage (4), étant disposé dans un plan parallèle à la graduation de mesure (3) et un champ magnétique (Y) étranger pouvant être produit par une bobine (6) ou par un conducteur (9) parcouru par un courant et la bobine (6) ou le conducteur (9) parcouru par un courant étant alimenté brièvement par un générateur d'impulsions (8), caractérisé par le fait que le générateur d'impulsions (8) est agencé de telle sorte que le champ magnétique (Y) étranger rend le champ magnétique (X) de la graduation de mesure (3 ) inopérant pendant un court instant et par le fait que le champ magnétique (Y) étranger est tel que que les éléments (5) sensibles au champ magnétique sont amenés pendant un court instant à l'état saturé.

2. Dispositif de mesure de position selon la revendication 1, dans lequel le générateur d'impulsions (8) est agencé de telle sorte que le champ magnétique (Y) étranger généré soit supérieur à l'intensité de champ de saturation des éléments (5) sensibles au champ magnétique.

3. Dispositif de mesure de position selon la revendication 1, dans lequel le générateur d'impulsions (8) forme un circuit de commutation avec deux interrupteurs (S₁) et (S₂), avec une bobine (6) ou des conducteurs (9) parcourus par un courant ainsi qu'avec au moins un élément échantillonneur-bloqueur (SH₁) et un amplificateur différenciateur.

4. Dispositif de mesure de position selon la revendication 3, dans lequel le générateur d'impulsions (8) est agencé de telle sorte que, lorsque le générateur d'impulsions (8) est activé, le champ magnétique (Y) étranger est généré ou la protection est activée, l'interrupteur (S₁) est ouvert et l'interrupteur (S₂) est fermé, la tension momentanée -habituellement la tension zéro- aux bornes du senseur (5) étant mémorisée dans l'élément échantillonneur-bloqueur (SH₁), que, lorsque le générateur d'impulsions (8) est désactivé, les états des interrupteurs (S₁) et (S₂) changent, la tension momentanée aux bornes du senseur (5 ) est transmise à l'amplificateur différenciateur (10) et est comparée à la tension zéro mémorisée dans l'élément échantillonneur-bloqueur (SH₁ ), également transmise à l'amplificateur différenciateur (10) et que l'on dispose à la sortie de l'amplificateur différenciateur (10) d'une tension de sortie (Ua) exempte de dérive de zéro pour la former la valeur de mesure.

5. Dispositif de mesure de position selon la revendication 4, dans lequel un élément échantillonneur-bloqueur (SH₂) supplémentaire est disposé dans le circuit de commutation, lequel élément échantillonneur-bloqueur est synchronisé avec le signal de sortie du senseur (5) et mémorise la dernière tension de signal actuelle du senseur (5) seulement pendant la phase active du générateur d'impulsions (8).
